# EUROPEAN PATENT SPECIFICATION

(11) **EP 1 762 050 B1**
(45) Date of publication and mention of the grant of the patent: **03.09.2014**
(21) Application number: 05754831.5
(22) Date of filing: 23.06.2005
(51) Int. Cl.: H04L 12/46, H04L 29/06

(54) **METHODS AND ARRANGEMENTS FOR CONNECTION DETERMINATION IN MULTI-DOMAIN VIRTUAL PRIVATE NETWORK**
VERFAHREN UND ANORDNUNGEN ZUR VERBINDUNGSBESTIMMUNG IN EINEM VIRTUELLEN PRIVATEN NETZWERK MIT MEHREREN DOMÄNEN
PROCEDES ET DISPOSITIFS DE DETERMINATION DE CONNEXION DANS UN RESEAU PRIVE VIRTUEL (VNP) A DOMAINES MULTIPLES

(30) Priority: 30.06.2004 WO PCT/SE2004/001065
(43) Date of publication of application: 14.03.2007
(73) Proprietor: Telefonaktiebolaget L M Ericsson (Publ), 164 83 Stockholm (SE)
(72) Inventor: MÅNGS, Jan-Erik, S-170 72 Solna (SE); FLINTA, Christofer, S-118 63 Stockholm (SE)
(74) Representative: Egrelius, Fredrik
(86) International application number: PCT/SE2005/001006
(87) International publication number: WO 2006/004501

(56) References cited:
- EP-A2- 1 156 625
- US-A1- 2004 034 702
- EL DARIEBY M. ET AL.: 'A Hierarchical Distributed Protocol for MPLS Path Creation.', [Online] 11 March 2002, XP010595868 Retrieved from the Internet: <URL:http://www.sce.carleton.ca/faculty/pet riu/papers/ISCC2002submit.pdf>

## Description

### TECHNICAL FIELD

The present invention relates in general to virtual private networks in communications systems and in particular to determination of suitable connection paths to virtual private networks in multi-domain communications systems.

### BACKGROUND

A Virtual Private Network (VPN) utilises a public or private communications network to conduct private communications. Traditionally, a company or other customer that wanted to build a wide-area network had to provide for its own dedicated lines between each node to provide the connectivity. Such solutions are, however, generally expensive and inflexible. During the last years, the concept of VPNs has evolved rapidly. VPNs offer a solution, where a communications network is shared between many customers, but where the communication of each customer is virtually separated. VPN technology is often based on the idea of tunnelling. Network tunnelling involves establishing and maintaining a logical network connection. On this connection, packets are encapsulated within some other base or carrier protocol. They are then transmitted between VPN client and server and eventually de-encapsulated on the receiver side. Authentication and encryption assists in providing security.

A tendency is that the number of network nodes that form a VPN grows fast, which results in large complex network structures and topology. This is caused, partly because of the increasing traffic on VPNs and partly on that the VPNs are requested to cover larger and larger geographical areas. Communication networks providing VPNs having nodes at all continents are present today. However, the more nodes and the more traffic that is to be transmitted, the more complex the configuration of VPNs becomes.

Conventionally, a VPN is created according to an agreement between a network operator and a customer. The location of the nodes, the quality of service and other conditions are agreed on and a programmer at the operator sets up the configuration manually or by consulting configuration aid tools. When having more and more complex communications networks, such configuration becomes more and more complex and time consuming. When configuring connections spanning over several domains, there are typically a number of alternative connection paths. Information from several domains then has to be collected and compiled in an appropriate manner. Furthermore, when a customer wants to modify its VPN, the entire procedure has to be repeated.

El-Darieby M and Rolia J 'A Hierarchical Distributed Protocol for MPLS Path Creation' Seventh International Symposium on Computers and Communications, 2002. Pages 920-926 discloses a method of determining a connection path while enabling QoS mechanisms between intra- and interdomain MPLS-based tunnels. It is further disclosed a hierarchical distributed protocol for enabling this method.

### SUMMARY

A general problem of prior-art solutions is thus that communications networks providing virtual private networks having a large geographical coverage and/or having large traffic become very complex. A further problem is that configuration of new VPNs or modifications of already existing VPNs become complex and time consuming. A further problem is that communication resources of network operators covering smaller geographical areas cannot be generally utilised for wide-area VPNs. Yet a further problem is that collection and compiling of VPN information from different domains is both time consuming and complex.

A general object of the present invention is thus to improve methods for finding suitable connection paths of VPNs as well as providing systems and arrangements implementing such methods. A further object of the present invention is to provide methods for finding connection paths for VPNs utilising more than one network domain. Another further object of the present invention is to provide methods for finding connection paths for VPNs that are basically independent on the actual VPN technology used in the different domains. Yet a further object of the present invention is to provide a method enabling optimum or near-optimum configuration of a VPN.

The above objects are achieved by methods and devices according to the enclosed patent claims. In general words, information about VPNs in a communications network having at least two interconnected domains is collected in a first domain by a push mechanism. The information about the VPNs comprises at least domain ID of domains in which the different VPNs currently are available. Domain VPN information is collected in each domain. The provision of domain VPN information can be performed in different ways, e.g. collection of data in a centralised or distributed manner, or by retrieving stored data. A distributed VPN control node is in particular embodiments localised to border nodes of a domain. The domain VPN information is in particular embodiments collected from the edge nodes of the domain. This can be performed by passively extracting broadcasted information from the edge nodes, by requesting domain VPN information from the edge nodes or a combination thereof. The collection can be triggered by an external event, such as a change in VPN information. The provided domain VPN information is spread to other domains, preferably under constrictions put by SLAs between domain operators. In a preferred embodiment, the domain VPN information is spread to adjacent domains, which modifies its own domain VPN information and thereby forwards also the received VPN information to further adjacent domains. In such a cascaded manner, the entire available domain VPN information is spread to all domains. The collected information about the VPNs is evaluated in order to find suitable connection paths. In one embodiment, an evaluation according to a quality measure is performed and an optimum connection path is selected accordingly. In a preferred embodiment, an evaluation is performed and all connection paths exceeding a predetermined threshold are configured. A statistical evaluation of the practical need can then be performed after some initial operation time.

One important advantage with the present invention is that it provides a simple and stable platform on which operators of different domains can cooperate. The domain VPN information is made available for supporting VPN configuration in essentially all domains of a multi-domain system. The inventive approach provides a means to ensure that an optimum or near-optimum connection path is possible to find according to present domain conditions. The invention is particularly well suited to be implemented in communication networks having a relatively stable configuration and topology.

### BRIEF DESCRIPTION OF THE DRAWINGS

The invention, together with further objects and advantages thereof, may best be understood by making reference to the following description taken together with the accompanying drawings, in which:
FIG. 1 is a schematic illustration of a multi-domain communications network providing virtual private networks;
FIG. 2A is a schematic illustration of VPN information collection according to an embodiment of the present invention;
FIGS. 2B-D are schematic illustrations of VPN information collection according to other embodiments of the present invention;
FIGS. 3A-D are embodiments according to the present invention of VPN control node configurations within a domain;
FIG. 4 is a schematic illustration of VPN information forwarding and connect requests according to an embodiment of the present invention;
FIG. 5 is a schematic illustration of an endless loop situation in VPN information forwarding;
FIG. 6A is a block scheme of an embodiment of a general VPN control node according to the present invention;
FIG. 6B is a block scheme of another embodiment of a VPN control node according to the present invention;
FIG. 7 is a schematic illustration of VPN configuration according to one embodiment of the present invention; and
FIG. 8 is a flow diagram illustrating the main steps of an embodiment of a method according to the present invention.

### DETAILED DESCRIPTION

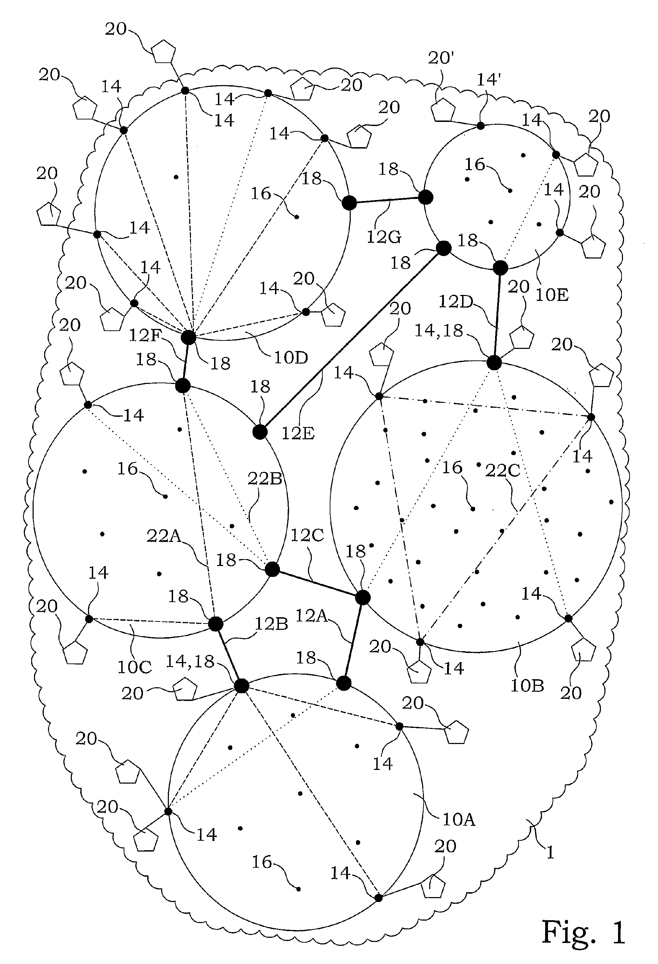

An embodiment of a general VPN provider architecture 1 is illustrated in Fig. 1. In this VPN Provider Architecture, there are five VPN Provider Domains 10A-E present, which are attached to each other by interdomain data connections 12A-G. One operator may control one or more of these domains 10A-E, or they can all be controlled by separate operators. The relation between the domains 10A-E, i.e. the control of the interdomain data connections 12A-G are typically regulated according to agreements between the involved operators, e.g. a VPN Service Level Agreement (SLA). Each VPN provider domain 10A comprises VPN edge nodes 14 and core nodes 16, which can be VPN aware or VPN unaware, of which only a few are provided with reference numbers. The VPN edge nodes 14 are nodes through which customer sites 20 of different customers are connected to different VPN's in the architecture 1. VPN unaware nodes 16 are just intermediate nodes within a domain and is only used for forwarding messages and data between VPN edge nodes 14. The customers are unaware of which VPN unaware nodes that are used for the communication. The only important matter is the starting and ending VPN edge node 14. A VPN connected in a domain can thus be represented by a direct line between VPN edge nodes 14, even if the actual communication may take place via one or several VPN unaware nodes 16. In the remaining part of the present disclosure, the existence of VPN unaware nodes will in general be neglected, since the basic procedural steps according to the present invention are not directly dependent on the existence of any VPN unaware nodes 16 or not. In the practical implementation, it is, however, likely that VPN unaware nodes 16 are used for providing the actual connectivity.

The VPN provider domains 10A-E are connected in a data plane via VPN border nodes 18, i.e. the interdomain data connections 12A-G start and end in a VPN border node 18. The VPN border node 18 may or may not at the same time also act as a VPN edge node 14. A customer site 20 is connected to one of the VPN edge nodes 14. Customer sites 20 of the same customer may then be connected through the VPN provider domains 10A-E by a VPN 22A-C. One customer may have customer sites 20 connected to different VPN's 22A-C. Also, more than one customer site 20 can be connected to the same VPN edge node 14, but will be unaware of the existence of the other customer site 20 as well as of the VPN to which the other customer site 20 is connected.

In the present embodiment, three VPN's 22A-C are illustrated. However, anyone skilled in the art realises that the number of VPN's in a real system typically is much higher. A first VPN 22A, illustrated by broken lines, is extended over three domains 10A, 10C, 10D and connects customer sites 20 in all of these domains. A second VPN 22B, illustrated by dotted lines, is extended over all domains 10A-E of the present embodiment. Finally, a third VPN 22C, illustrated by a dash-dotted line, connects customer sites 20 only within the domain 10B. Each customer site 20 is unaware of the existence of customer sites 20 of other customers as well as of the existence of any VPN's except the one it is connected to. In such a manner, the privacy character of the VPN's is preserved, although they all share the same basic communications resources. This is the scenario in which the present invention preferably operates.

In the present disclosure, different connections are discussed - interdomain, intradomain, user plane connections, control plane connections, overlay control connections, connections between nodes and user terminals etc. It is assumed throughout the entire description that these connections can be of any kind. The basic idea of the present invention is not dependent on the actual connection technology. This means that both wired and wireless technologies can be used for any of these connections. In particular, concerning the use of wireless connections, the user terminals can be mobile relative to the edge nodes. The nodes within a domain can be mobile relative to the other nodes. Even the domains may be mobile relative to each other.

Now, consider that a new customer site 20' is connected to a VPN edge node 14' in domain 10E. If the customer site 20' wants to be connected to VPN 22B, the procedures are probably relatively simple, since the VPN 22B already is present within domain 10E. Manual or automatic VPN reconfiguration procedures according to prior art may be employed, as well as mixes therebetween. However, if the new customer site 20' wants to connect to VPN 22A or 22C, the situation becomes more difficult. In prior art, there are no general interdomain VPN configuration procedures.

One basic idea of the present invention concerns provision of domain VPN information, comprising VPN identity of VPNs available in the respective domain.

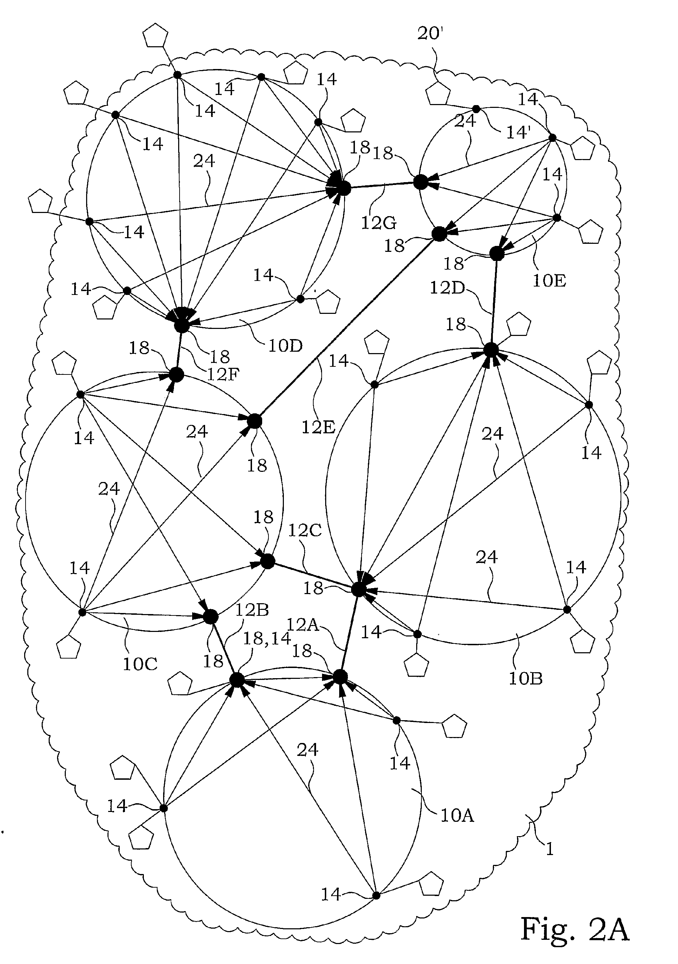

First, a few examples are described, illustrating how domain information can be collected. This is made in connection to Figs. 2A-3D. The main inventive ideas then follows.

Fig. 2A illustrates an embodiment of an initial phase of providing domain VPN information. Each VPN edge node 14 has stored information reflecting its own present VPN configuration regarding at least which VPN's that have connected customer sites at that particular VPN edge node 14. In particular embodiments, the VPN edge node 14 has information also about which customers that are connected to the VPN edge node 14 and associations between the present VPN's and customer sites 20. In some embodiments, information, such as VPN address space and address type (local or global), VPN quality of service classes, specified by requirements such as bandwidth, delay and jitter, and/or VPN set-up, i.e. use of tunnels or filters is provided. Also information such as encryption properties, transparency layer properties, tunnelling properties and topology properties can be included. Furthermore, the VPN border nodes 18 have stored information about the identity of the VPN provider domain it belongs to.

According to one embodiment of the present invention, the domain VPN information stored in each VPN edge node 14, or at least parts thereof, is collected by each border node 18 in the same domain 10A-E. This is visualised in Fig. 2A as arrows, of which some are provided with reference number 24. In such a way, the collective domain node information for the own domain is available in each VPN border node 18 of each domain 10A-E. One alternative for the communication is to use a communication protocol similar to BGP (Border Gateway Protocol), spreading the information all over the domain without any particular knowledge about where the need for information is. The border nodes may then pick up all necessary information. This is an example of a push mechanism for distributing domain VPN information.

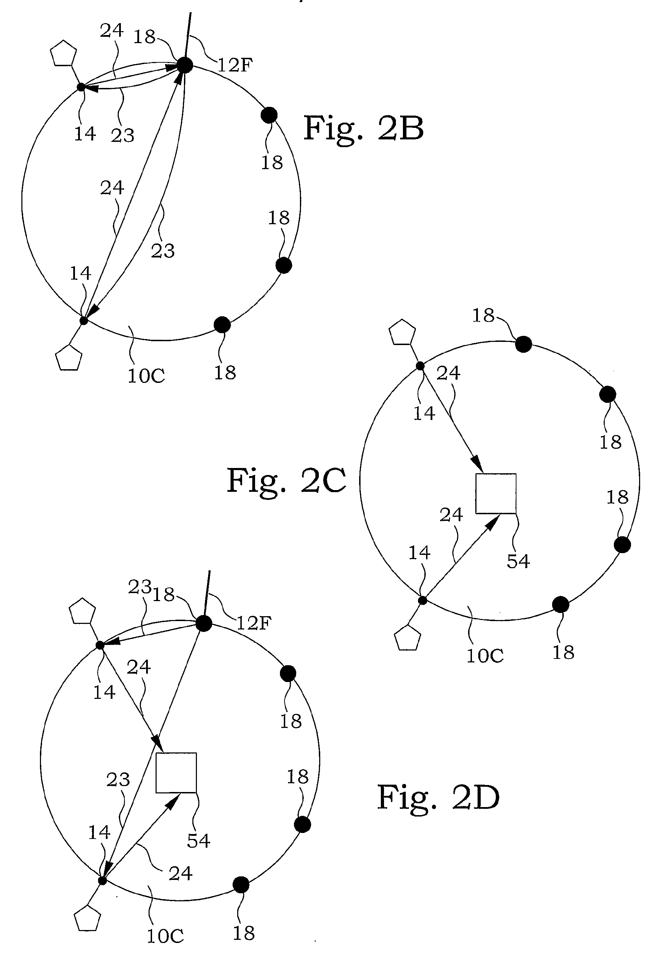

Fig. 2B illustrates another embodiment for providing domain VPN information, now concentrated to one domain 10C. If the VPN border nodes 18 have stored information about which edge nodes 14 that are present in the same domain 10C, the VPN border node 18 can simply request 23 any VPN edge node 14 to return its domain node information 24. In the simplest form of requesting information, the request itself could be a question if the VPN edge node 14 is associated to a certain VPN or not, e.g. received by the domain interconnection 12F. An acknowledgement message will in such a case not comprise any information as such, but will implicitly transfer information of this particular VPN at that particular VPN edge node. This is an example of a pull mechanism for distributing domain VPN information.

The domain VPN information can also be collected with different timing. One alternative is to continuously or at least regularly collect such information to the border nodes in order to assure that the available information always is updated. In such embodiments, the information is preferably stored in the border nodes or in any other node where it is retrievable from the border node, see embodiments described further below. Another alternative is that the information collection is triggered by some event. This event could e.g. be a broadcasting message from an edge node that there is a change of some kind or, as being described above, a request for finding a particular VPN. If all edge nodes have knowledge about which border nodes that are available in the domain, the information could also be sent directly to all border nodes when such a change occurs. In case the information is searched as triggered by a request to find a certain VPN, the collected information may be restricted to that VPN and may not even necessarily be stored for later use.

Fig. 2C illustrates an embodiment, where the domain VPN information is collected in a centralised manner. A storage 54 is provided to store all domain VPN information 24 provided by the different edge nodes 14. Any functionality using such domain VPN information can the retrieve this information from the central storage 54.

Fig. 2D illustrates another embodiment based on a centralised collection of domain VPN data. Here, a request 23 or other external signal can initialise the provision of VPN data 24 to the storage 54. This request 23 does not necessarily have to come from the storage itself 54.

As an alternative to collect domain VPN information among the domain nodes, the domain VPN information may instead be provided by retrieving data from a data storage. This stored data could e.g. be the result of a previous collection of data according to the procedures above, or could be provided from elsewhere.

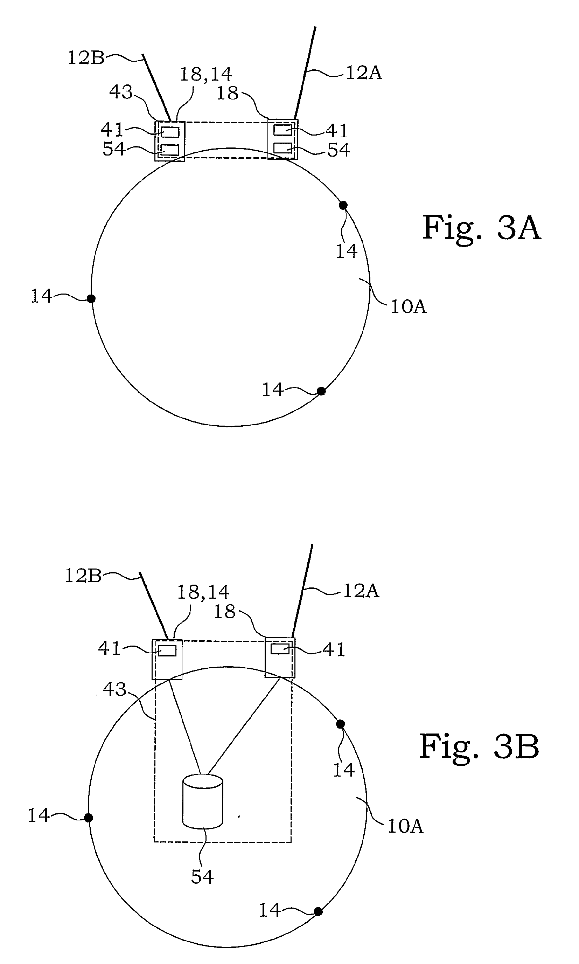

In the previously described embodiment, the provision of data within a domain is executed by the border nodes or a node in direct association therewith. Such a situation is also illustrated in Fig. 3A. Here, one domain 10A in a multidomain system is illustrated more in detail. The border nodes 18 are responsible for the data traffic to and from other domains by the data connections 12A and 12B. The border nodes 18 comprise in this particular embodiment means 41 for collecting domain VPN information, in the form of e.g. software functionality in the processors of the border node 18. The domain VPN information can be stored in a storage 54. A VPN control node 43 for handling domain VPN information regarding the domain as a whole is thus in this particular embodiment implemented as a distribution of local means 41 at every border node 18.

In Fig. 3B, another particular embodiment is illustrated. Here, the border nodes 18 still comprise functionality entities 41 involved with domain VPN information. However, a distributed VPN control node 43 comprises in this particular embodiment means 41 for providing domain VPN information situated in or in connection with the border nodes 18 and a central database 54. In the central database 54, the actual updated and preferably also historical VPN information is stored.

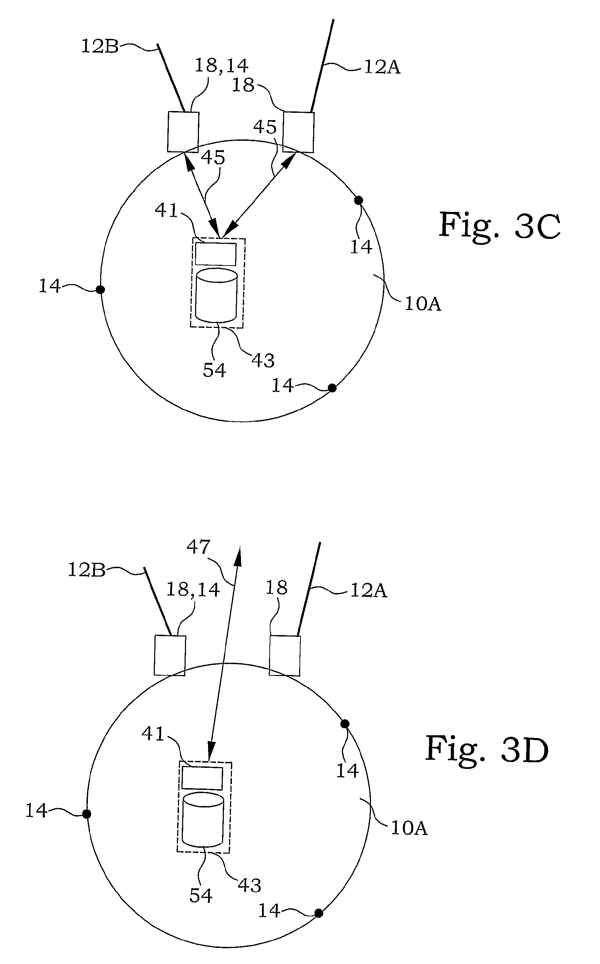

In Fig. 3C, yet another particular embodiment is illustrated. Here, the VPN control node 43 is centralised and comprises the means 41 for providing domain VPN information and the central database 54 basically provided at the same location. The border nodes 18 are in this particular embodiment merely used for handling communications 45 between the VPN control node and neighbouring domains. Functionalities in the border nodes 18 regarding control signalling associated with the actual data traffic can in such a way be utilised also to signal control messages concerning VPN configuration.

In Fig. 3D, an embodiment having a VPN control node 43 that is virtually separated from the border nodes in the system is illustrated. The VPN control node 43 is in such an embodiment connected to VPN control nodes in other domains by dedicated VPN control signal connections 47, creating a high-level network of its own.

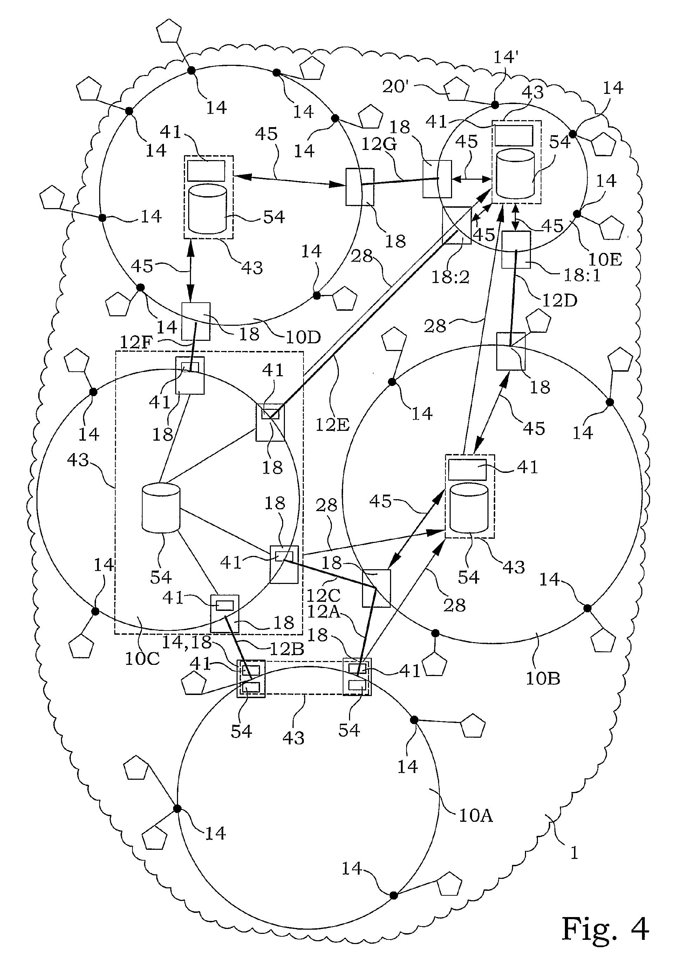

In a particular embodiment of the present invention, the provided domain VPN information can be transferred within the system, i.e. between the different domains. This is illustrated in Fig. 4. The first step is provision of VPN information within each domain. This is performed by a VPN control node 43 in each domain. However, the configuration of the VPN control nodes 43 may differ between the different domains. In Fig. 4 it is indicated that domain 10A has a VPN control node 43 similar to the example shown in Fig. 3A, domain 10C has a VPN control node 43 similar to the example shown in Fig. 3B and domains 10B, 10D and 10E have VPN control nodes 43 similar to the example shown in Fig. 3C. According to each SLA regulating the traffic between the different domains, at least a part of the available domain VPN information in each VPN control node 43 is in this embodiment transferred to the counteracting VPN control node in the neighbouring domains. Arrows 28 illustrate this interdomain transfer of information. The SLA may comprise agreements about how much of the available information that should be made available for the neighbouring domain. In a general case, the VPN control node processes available intradomain VPN information into compiled or processed VPN information that is suitable to forward to neighbouring domains. If the domains are closely related, e.g. belonging to the same operator, the SLA could involve a total transparency in exchanging domain VPN information. In other cases, the processed information 28 that is transferred between the VPN control nodes 43 may be compiled VPN information, only revealing very basic fact about the individual domain VPNs. The information that has to be sent over the interdomain connections 12A-G in the present embodiment comprises at least the identities of the VPN's that are available somewhere beyond the border node that sends the information.

According to the present invention, the information about VPNs comprises at least domain ID of domains in which the VPNs currently are available. Preferably, the information about VPNs also comprises further data, such as but not limited to properties of the VPNs, link qualities of links currently used by the VPNs, link qualities of links available for extending the VPNs, node ID of nodes at which the VPNs are available, and information about which domains that has to be transited to reach a domain in which the VPNs are available. The properties of the VPNs may comprise e.g. quality of service properties, encryption properties, transparency layer properties, tunnelling properties; and topology properties.

In Fig. 4, the information 28 sent on the interdomain connections 12A-G causes an update of the total available VPN information situation at the receiving VPN control node. This VPN control node now also has information e.g. of what VPN's that are available via the interdomain connections. If more thorough information is available, the VPN control node may also determine e.g. edge node identities at which these different VPN's are available, VPN quality of service etc. The so achieved VPN information is now a property of the neighbour domain and can, if allowed by the SLA, be used for activities in that domain. The information stored in the storage 54 of the VPN control node 43 could be identical to the information received from the neighbouring domain or a processed version thereof, adding, removing or modifying the received information. For instance, the information could be labelled with an indication from what domain it originated from.

This information distribution may continue in many successive steps, in some cases applying further modification of the information before forwarded to another domain, in analogy with the first transfer. Eventually, all VPN control nodes in the entire VPN provider architecture 1 have at least a processed version of all domain VPN information available in the system. At each VPN control node, the information may be processed according to the SLA that is valid for the associated interdomain connection to be used.

The exchange of domain VPN information can be performed with different timing. One alternative is to continuously or at least regularly exchange such information in order to assure that the available information always is updated. In such embodiments, the information is preferably stored in the VPN control nodes or in any other node, where it is retrievable by the VPN control node. In other words, this alternative is a typical push mechanism for data distribution.

Another alternative is that the information exchange is triggered by some event. This event could e.g. be that a change of some kind has occurred in a domain.

In a preferred embodiment, the spreading of VPN information is also associated with an acknowledgement procedure. When a domain has received VPN information from an adjacent domain, an acknowledgement message is returned in order to inform the domain providing the VPN information that the information now is available in the domain. Preferably, received acknowledgements that are associated with forwarded VPN information are forwarded to the domain from which the VPN information came in the first place. In other words, VPN information is forwarded in one direction and corresponding acknowledgement messages are forwarded in return.

Now, consider the connection of a new customer site 20' to an edge node 14' intended to be connected to a certain VPN. The control node 43 identifies that a new customer site 20' is connected and investigates which VPN it is intended for. According to the present invention means are provided for finding information about the intended VPN and according to a quality measure finding suitable connection paths thereto.

When a VPN control node 43 initiates a VPN connection request, it compares the requested VPN to the stored information about VPN's that is available through its interdomain connections. Information about in which domain the VPN exists and through which interdomain connections the VPN is reachable is available. In Fig. 4, the requested VPN is the VPN 22A of Fig. 1. VPN control node 43 of domain 10E has information about that VPN 22A is available through border node 18:1 according to two different paths. One alternative to reach VPN 22A is over interdomain connection 12D, through domain 10B and over interdomain connection 12A. The VPN 22A is then present within domain 10A. Another alternative to reach VPN 22A is over interdomain connection 12D, through domain 10B and over interdomain connection 12C. The VPN 22A is then present within domain 10C. However, the VPN control node 43 of domain 10E has also information about VPN 22A via another border node 18. Here, the requested VPN 22A is reachable over interdomain connection 12E, since VPN 22A is available in domain 10C. Finally, the requested VPN 22A is reachable over interdomain connection 12G, since VPN 22A is available also in domain 10D.

Information about how the different domains are connected together has to be present when analysing possible connections. This information can be obtained in many different ways. Since the present invention operates most advantageously in systems having a relatively stable configuration, a "map" of the domains and interdomain connections is assumed to be spread over the different domains.

The VPN control node 43 has thus all necessary information for finding the requested VPN. The VPN control node 43 evaluates the available information about the required VPN, by determining a quality measure for each possible connection path. Such a quality measure may be based on e.g. the number of new links to be established, the number of domains to pass before reaching the required VPN, how central the node, at which the VPN is reached, is situated within the required VPN, minimum quality of service properties of links to be established etc. In this example, the route over interdomain connection 12E seems most simple to use, but e.g. available quality of service levels may change such decisions.

The process of finding suitable connection paths could be performed according to different principles. One possibility is to have an acceptance threshold and only connection paths having a quality measure exceeding the acceptance threshold will be considered at all. For the remaining suitable connection paths, one may select the one having the highest quality measure to be configured. One may also choose to select more than one connection path to be configured, in the extreme case all accepted connection candidates.

In the present invention, the provided domain VPN information is spread to all VPN control nodes 43 of the entire system 1. In such a way, a request for finding a suitable VPN can be put directly to a VPN control node 43 of the "home" domain. The provision and exchanging of VPN information can as indicated before be performed continuously, regularly or even trigged by the request itself.

This approach has the disadvantage that the entire system 1 has to be updated in every single VPN control node 43. However, in systems where the structure of domains and VPNs is fairly static, the communication efforts necessary to keep the VPN control nodes 43 updated are relatively low.

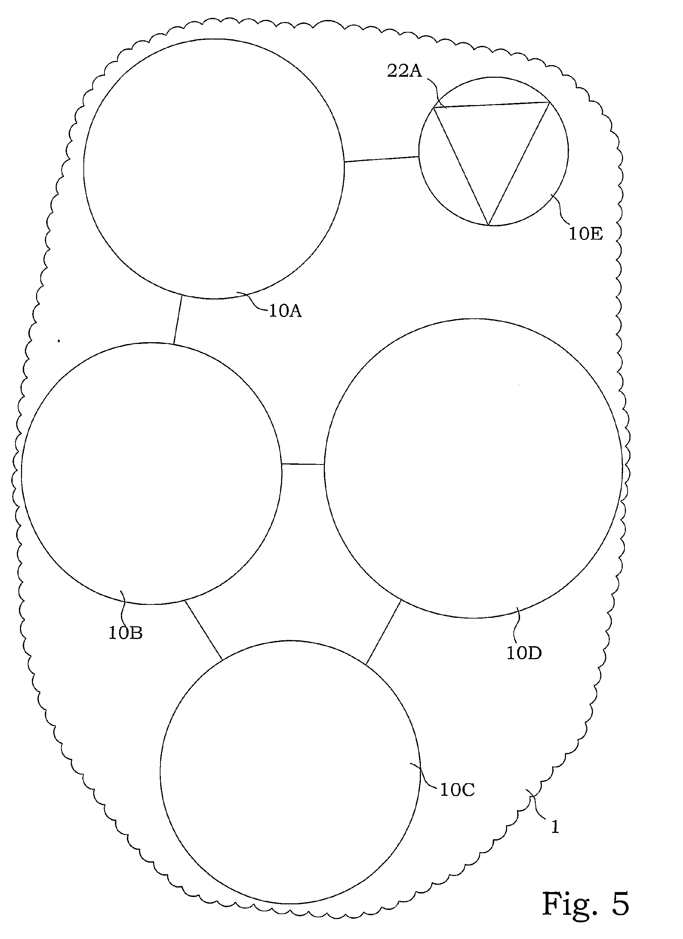

In the process of spreading the VPN information over the system, there is preferably a limitation of further forwarding of received information. In Fig. 5, a situation potentially giving a risk for endless loops of VPN information provision is illustrated. A communications network 1 comprises five domains 10A-E. In domain 10E, a VPN 22A is available. Now, consider a situation, where VPN 22A is changed in some manner, e.g. that an intra-domain connection is upgraded to support a higher bandwidth. Domain 10E performs an internal updating of the VPN information and sends updated VPN information to its sole adjacent domain 10A. The domain 10A updates its own database and forwards the VPN information to domain 10B.

Also in domain 10B the information about VPN 22A is updated. The update information is then forwarded to the further adjacent domains 10C and 10D. The procedure is repeated also in these domains and another forwarding of the VPN information is performed. Domain 10C sends the information to the domain 10D and the domain 10D sends the same information to the domain 10C. The procedure continues, and an endless loop of VPN information will circulate between domains 10B-D. In a preferred embodiment of the present invention, means for prohibiting the information requests to be forwarded in endless loops are provided. Such means for prohibiting looping of information requests are preferably provided in connection with sending or receiving of such information requests, i.e. they are arranged either to prohibit the actual forwarding to a new adjacent domain or to prohibit the acceptance of a received information request. Several embodiments of posing restrictions on forwarding are possible. Some of them are briefly mentioned here below.

In one embodiment of a loop prohibiting arrangement, each VPN information message is provided with an identity. This identity could e.g. be a separate field having a certain unique identity number, or the identity could be based on the actual information it carries. If separate identities of VPN information messages are used, received and accepted VPN information messages are preferably stored in a storage. When a new VPN information message arrives, a comparison is made with the stored data to reveal if the information request already has been received before. In such a case, the request is neglected. Otherwise the request is accepted and the identity is added to the storage.

The comparison could also be performed in connection with the actual forwarding of the VPN information. In such a case, the message identity could be stored in the storage and an extra condition for forwarding the request could be that there should not be two identical message identities within the database.

If the identity is based on the VPN information itself, the received VPN information is compared with the corresponding VPN information presently stored in the domain. If the VPN information does not cause any changes to be made, the received VPN information is considered as a duplicate message and is rejected. In such an arrangement, only true updates are forwarded.

Another embodiment for loop prohibiting is based on information about forwarding paths. By adding information in the VPN information message itself about which domains that are passed during the forwarding process, a receiving domain can easily search for its own identity among this information. If the own identity is present, the information is neglected. Otherwise, the own identity is added and the information can be forwarded. The comparison can also be made at the sending side. Before forwarding a VPN information message to a domain, the sending domain searches the forwarding path information for the identities of its adjacent domains. For domains which already are present in the forwarding path, forwarding is prohibited.

Yet another embodiment is based on life-time. A certain life-time can be set when creating the original VPN information update, e.g. by fixing a validity expiration time. When receiving and/or forwarding such information, this validity expiration time is checked against e.g. a system time, and when the validity is expired, no more forwarding is performed. A variation of the lime-time concept is to set a remaining life-time, which then is reduced in connection to each forwarding. When the remaining life-time vanishes, no more forwardings are performed. This approach can then also be used, utilising the number of forwardings as a measure of "time", i.e. it is stated from the initialisation that a maximum number of forwardings is allowed. For each forwarding, the remaining number is reduced by one unit.

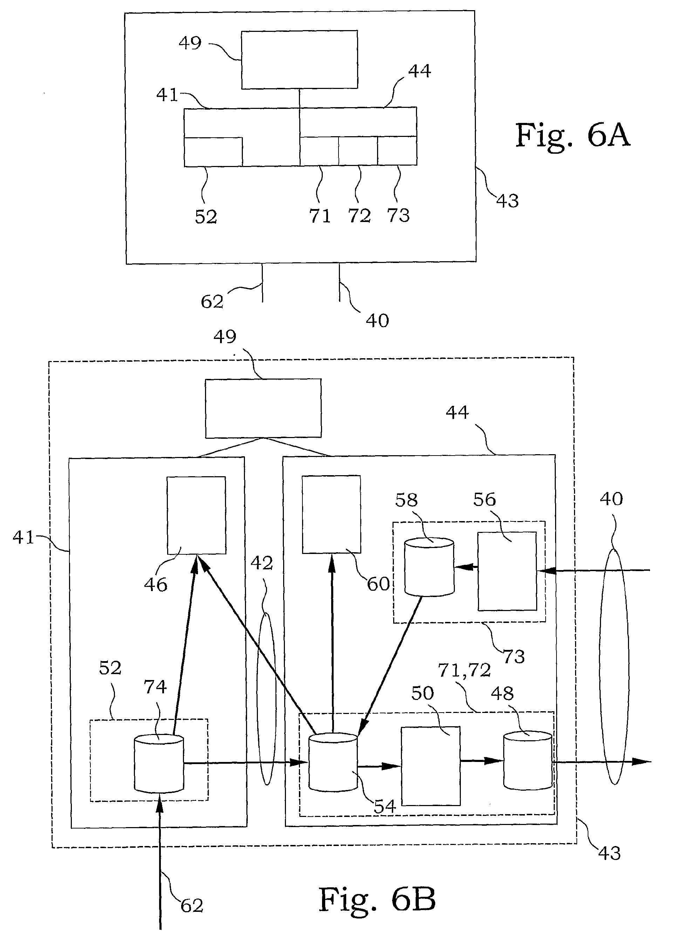

Fig. 6A illustrates a block scheme of a particular embodiment of a relatively general VPN control node 43 according to the present invention providing the connection path determination arrangement. The VPN control node 43 comprises means 52 for providing domain VPN information. This information may be provided by other nodes in the domain by connections 62. A main control communication interface 40 is provided for communication with other domains. This interface 40 may be arranged in combination with the intra-domain connections 62. An evaluation unit 49 investigating if an identity of a requested VPN matches with domain VPN information is provided. The evaluation unit 49 is further arranged for performing the above discussed evaluation of the information about the requested VPN according to a quality measure for finding suitable connection paths. The VPN request can be received from another node of the own domain or can be initiated within the VPN control node. An external VPN handling section 44 is responsible for handling interdomain VPN configuration. The external VPN handling section 44 comprises means for spreading 71 the information about VPNs available in the own domain to adjacent domains. The external VPN handling section 44 further comprises means for receiving 73 information about VPNs from adjacent domains and means for distributing 72 information based on received information about VPNs from adjacent domains to other adjacent domains. The means 71-73, and in particular means 71-72, can preferably be arranged in an integrated manner, since there are many common part functionalities of the different means. However, in other embodiments, separate units can be provided. An internal VPN handling section 41 has functionalities for configuring internal connections within the own domain and comprises preferably the means for collecting information about VPNs available in the own domain, i.e. the means 52 for providing domain VPN information.

Fig. 6B illustrates a block scheme of another particular embodiment of a VPN control node 43 according to the present invention. Domain VPN information regarding the own domain is provided by an internal VPN handling section 41, comprising means for collecting 52 information about VPNs. The internal domain VPN information is in this particular embodiment stored in a data memory 74. This information is in this particular embodiment provided, as illustrated by the arrow 62, by communication with other nodes within the domain. In other embodiments, this information can be obtained in other ways. The internal domain VPN information is also forwarded to a total VPN information database 54 in an external VPN handling section 44. The internal VPN handling section 41 also comprises an internal configuration machine 46, having functionalities for configuring internal connections within the own domain. The internal VPN handling section 41 is provided with internal domain VPN information, as well as information from the database 54. Communications regarding internal domain matters are thus performed over a connection 42 between the internal VPN handling section 41 and the external VPN handling section 44.

The VPN control node 43 has a main control communication interface 40 with other domains over an interdomain connection. Domain VPN information from other domains are received by the interface 40, and an input processing unit 56 extracts useful information from the received data and stores this external information in an input database 58. In this input database 58, additional information as from which domain the external data was received is also stored. The input processing unit 56 and the input database 58 are in this embodiment comprised in the means for receiving 73 information about VPNs from adjacent domains. The input database 58 updates the total VPN information database 54 when appropriate. The external VPN handling section 44 also comprises an external configuration machine 60, having functionalities for configuring parts of interdomain connections that are relevant for the domain. This functionality will be described more in detail below.

The external VPN handling section 44 also provides information to other domains. Domain VPN information, associated with the own domain and/or with other domains is extracted from the database 54 and provided to an output data processing unit 50. The retrieved information is processed according to SLAs associated with the different neighbour domains and stored in an output database 48. The SLAs thereby determines what information is allowed to be spread to the different neighbouring domains. Domain operators having a close relationship may allow for more transparent exchange of information, whereas domains belonging to non-related operators may apply a more restrictive information exchange. Information about VPN's is transmitted on the interface 40, when suitable. The database 54, the output data processing unit 50 and the output database 48 are in the present embodiments comprised in a common unit 71, 72 for spreading the information about VPNs available in the own domain and for distributing information based on received information about VPNs from adjacent domains.

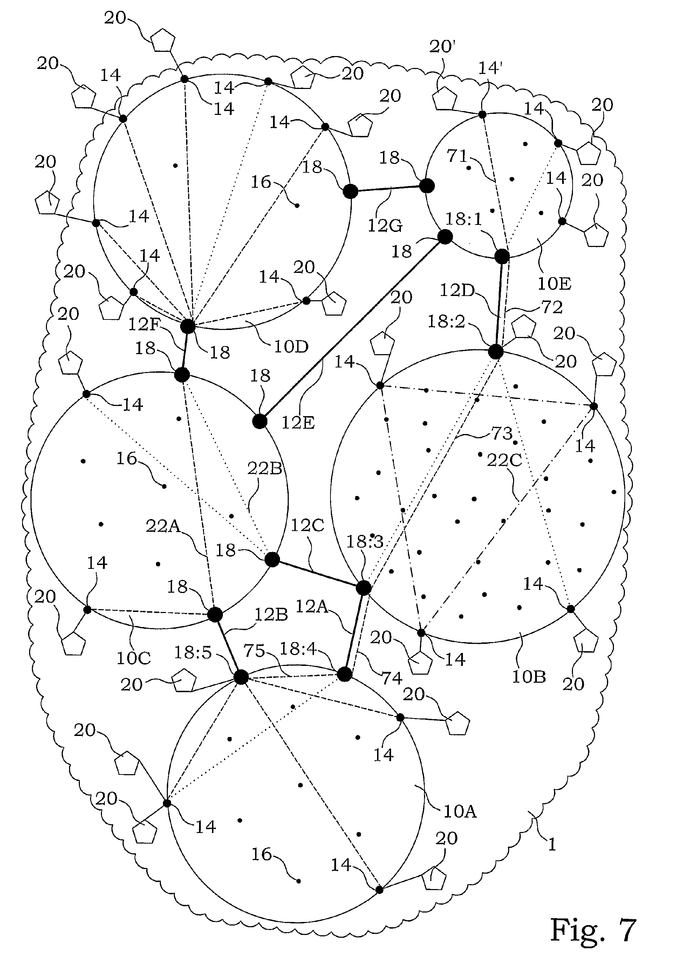

An example, illustrated in Fig. 7, shows how a subsequent configuration of an interdomain VPN can be automated. A new customer site 20' in the domain 10E shall be connected to VPN 22A. It is assumed that VPN tunnels are used for VPN connections both inside domains and between domains. The following steps are taken.

The VPN control node in domain 10E gets a request, in some way, from the customer to connect to VPN 22A. Since the VPN database of domain 10E shows that the VPN 22A is not present in domain 10E, the VPN control node in domain 10E cannot connect customer site 20' directly to the VPN 22A inside domain 10E. However, VPN information originated from other domains is available showing that a connection path to VPN 22A can be found at "nexthop" 10B, 10C and 10D.

The VPN control node in domain 10E chooses to set up the VPN via the "nexthop" 10B only, according to the evaluation of the quality measure discussed above. It sets up a VPN tunnel 71 for VPN 22A from the edge node 14' where the customer site 20' is connected, to the border node 18:1, which is connected to domain 10B via link 12D. The VPN control node in domain 10E initiates communication with the VPN control node in domain 10B and sets up a VPN tunnel 72 for VPN 22A over the link 12D to border node 18:2.

The VPN control node in domain 10B sets up the VPN via the "nexthop" 10A. It sets up a VPN transit tunnel 73 for VPN 22A from the border node 18:2, which is connected to domain 10B via link 12D, to the border node 18:3, which is connected to domain 10A via link 12A. The VPN control node in domain 10B initiates communication with the control node in domain 10A and sets up a VPN tunnel 74 over the link 12A to border node 18:4. Since VPN 22A is present in domain 10A, the control node in domain 10A can set up an internal tunnel 75 from the border node, which is connected to domain 10B via link 12A, to the border node 18:5, which is connected to the VPN 22A.

After each step, the updated VPN databases will be available for the next round of collecting VPN information.

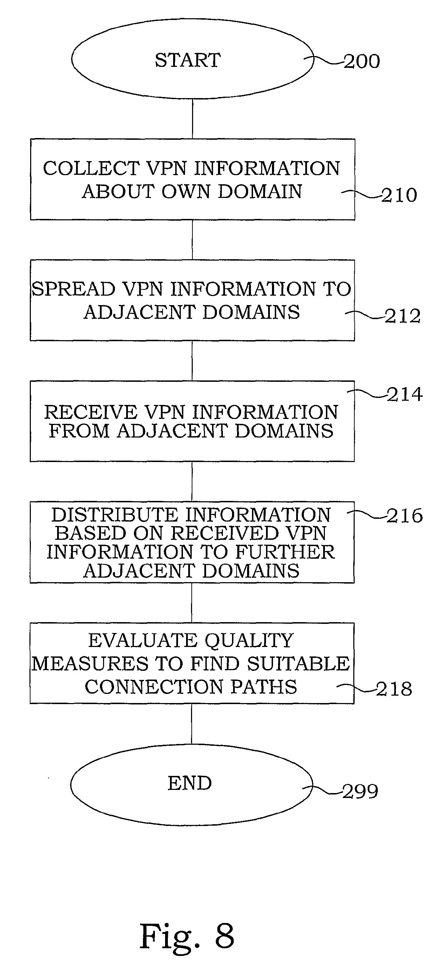

The basic steps of an embodiment of a method according to the present invention are illustrated in Fig. 8. The procedure starts in step 200. In step 210, information about VPNs available in each domain is collected in respective domain. In step 212, the information about VPNs is spread to adjacent domains. In step 214, information about VPNs from adjacent domains is received. Based on the received information about VPNs from adjacent domains, information is distributed to other adjacent domains in step 216, with or without any intermediate processing. From the total information about VPNs, an evaluation of quality measures is made in step 218 to find suitable connection paths. The procedure ends in step 299.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

## Claims

1. Method for determining a connection path, in a multi-domain virtual private network (22 A-B) - VPN - within a communications network having at least two interconnected domains (10 A-E), between a first node in a first domain and a first VPN, comprising the steps of:
Collecting (210), in each domain, information about VPNs available in said each domain;
Spreading (212) the information about VPNs to adjacent domains;
receiving (214) information about VPNs from adjacent domains;
distributing (216) information based on received information about VPNs from adjacent domains to other adjacent domains;
the information about VPNs comprising at least domain ID of domains in which the VPNs currently are available; and
evaluating (218) information about the first VPN according to a quality measure for finding suitable connection paths between said first node in said first domain and said first VPN.

2. Method according to claim 1, wherein the step of spreading is performed towards all adjacent domains and the step of distributing is performed towards all adjacent domains except the adjacent domain providing the received information about VPNs.

3. Method according to claim 1 or 2, wherein at least one of the step of spreading and the step of distributing is performed regularly.

4. Method according to claim 1 or 2, wherein at least on of the step of spreading and the step of distributing is performed when triggered by an event.

5. Method according to claim 4, wherein the event is a change in the information about VPNs available in said each domain.

6. Method according to claim 4, wherein the event is a reception of information about VPNs from an adjacent domain.

7. Method according to any of the claims 1 to 6, comprising the further steps of:
returning an acknowledgement message to adjacent domains from which information about VPNs are achieved;
receiving acknowledgement messages from adjacent domains; and
forwarding received acknowledge messages for the distributed information based on received information about VPNs from adjacent domains to the adjacent domain from which the information about VPNs was received.

8. Method according to any of the claims 1 to 7, comprising the further steps of prohibiting the information about VPNs to be forwarded in endless loops within the communications network.

9. Method for determining a connection path according to claim 8, wherein the step of prohibiting is performed before distributing the information about VPNs to an adjacent domain.

10. Method for determining a connection path according to claim 8, wherein the step of prohibiting is performed before accepting received information about VPNs from another domain.

11. Method for determining a connection path according to any of the claim 8 to 10, wherein the step of prohibiting is based on a comparison between the presently received information about VPNs and a storage of data representing earlier received information about VPNs.

12. Method for determining a connection path according to any of the claim 8 to 10 wherein the step of prohibiting is based on a comparison between domain identities and data representing domains that the received information about VPNs has passed, comprised in the information about VPNs.

13. Method for determining a connection path according to any of the claim 8 to 10, wherein the step of prohibiting is based on a life-time of the information about VPNs.

14. Method according to any of the claims 1 to 13, wherein the information about the VPNs additionally comprises at least one of:
properties of the first VPN;
link qualities of links currently used by the first VPN;
link qualities of links available for extending the first VPN;
node ID of nodes at which the VPNs are available; and
information about which domains that has to be transited to reach a domain in which the VPNs are available.

15. Method according to claim 14, wherein properties of the first VPN comprises at least one of:
quality of service properties;
encryption properties;
transparency layer properties;
tunnelling properties; and
topology properties.

16. Communications network domain arrangement, comprising:
means (52) for collecting information about virtual private networks - VPNs - available in a domain of the communications network domain arrangement;
means (71) for spreading the information about VPNs to adjacent domains in a communications network having at least two domains;
means (73) for receiving information about VPNs from adjacent domains in the communications network;
**characterized by**:
means (72) for distributing information based on received information about VPNs from adjacent domains to other adjacent domains;
the information about the first VPN comprising at least domain ID of domains in which VPNs currently are available; and
means (49) for evaluating the information about VPNs according to a quality measure for finding suitable connection paths from nodes of the domain to a first VPN.

17. Communications network domain arrangement according to claim 16, wherein the means for spreading is arranged to spread the information about VPNs to all adjacent domains and the means for distributing is arranged to distribute the received information about VPNs to all adjacent domains except the adjacent domain providing the received information about VPNs.

18. Communications network domain arrangement according to claim 16 or 17, comprising:
means for returning an acknowledgement message to adjacent domains from which information about VPNs are achieved;
means for receiving acknowledgement messages from adjacent domains; and
means for forwarding received acknowledge messages for the distributed information based on received information about VPNs from adjacent domains to the adjacent domain from which the information about VPNs was received.

## Patentansprüche

1. Verfahren zum Bestimmen eines Verbindungswegs in einem virtuellen privaten Netzwerk - VPV - mit mehreren Domänen (22 A-B) innerhalb eines Kommunikationsnetzwerks mit mindestens zwei zusammengeschalteten Domänen (10 A-E) zwischen einem ersten Knoten in einer ersten Domäne und einem ersten VPN, umfassend die folgenden Schritte:
Erfassen (210), in jeder Domäne, von Informationen über VPNs, die in jeder der Domänen verfügbar sind;
Verbreiten (212) der Informationen über VPNs an angrenzende Domänen;
Empfangen (214) von Informationen über VPNs von angrenzenden Domänen;
Verteilen (216) von Informationen basierend auf empfangenen Informationen über VPNs von angrenzenden Domänen an andere angrenzende Domänen;
wobei die Informationen über VPNs mindestens die Domänen-ID von Domänen, in denen die VPNs gegenwärtig verfügbar sind, umfassen; und
Bewerten (218) von Informationen über die erste VPN gemäß einem Qualitätsmaß zum Finden geeigneter Verbindungswege zwischen dem ersten Knoten in der ersten Domäne und dem ersten VPN.

2. Verfahren nach Anspruch 1, wobei der Schritt des Verbreitens hin zu allen angrenzenden Domänen durchgeführt wird und der Schritt des Verteilens hin zu allen angrenzenden Domänen außer der angrenzenden Domäne, die die empfangenden Informationen über VPNs bereitstellt, durchgeführt wird.

3. Verfahren nach Anspruch 1 oder 2, wobei mindestens einer des Schritts des Verbreitens und des Schritts des Verteilens regelmäßig durchgeführt wird.

4. Verfahren nach Anspruch 1 oder 2, wobei mindestens einer des Schritts des Verbreitens und des Schritts des Verteilens bei Auslösung durch ein Ereignis durchgeführt wird.

5. Verfahren nach Anspruch 4, wobei das Ereignis eine Veränderung in den Informationen über VPNs, die in jeder der Domänen verfügbar sind, ist.

6. Verfahren nach Anspruch 4, wobei das Ereignis ein Empfang von Informationen über VPNs von einer angrenzenden Domäne ist.

7. Verfahren nach einem der Ansprüche 1 bis 6, umfassend die folgenden ferneren Schritte:
Zurücksenden einer Bestätigungsnachricht an angrenzende Domänen, von denen Informationen über VPNs erlangt werden;
Empfangen von Bestätigungsnachrichten von angrenzenden Domänen; und
Weiterleiten empfangener Bestätigungsnachrichten für die verteilten Informationen basierend auf empfangenen Informationen über VPNs von angrenzenden Domänen an die angrenzende Domäne, von der die Informationen über VPNs empfangen wurden.

8. Verfahren nach einem der Ansprüche 1 bis 7, umfassend den ferneren Schritt des Unterbindens, dass die Informationen über VPNs in Endlosschleifen innerhalb des Kommunikationsnetzwerks weitergeleitet werden.

9. Verfahren zum Bestimmen eines Verbindungswegs nach Anspruch 8, wobei der Schritt des Unterbindens vor dem Verteilen der Informationen über VPNs an eine angrenzende Domäne durchgeführt wird.

10. Verfahren zum Bestimmen eines Verbindungswegs nach Anspruch 8, wobei der Schritt des Unterbindens vor dem Annehmen empfangener Informationen über VPNs von einer anderen Domäne durchgeführt wird.

11. Verfahren zum Bestimmen eines Verbindungswegs nach einem der Ansprüche 8 bis 10, wobei der Schritt des Unterbindens auf einem Vergleich zwischen den gegenwärtig empfangenen Informationen über VPNs und einer Speicherung von Daten, die früher empfangene Informationen über VPNs repräsentieren, basiert.

12. Verfahren zum Bestimmen eines Verbindungswegs nach einem der Ansprüche 8 bis 10, wobei der Schritt des Unterbindens auf einem Vergleich zwischen Domänen-Identitäten und Daten, die Domänen repräsentieren, die die empfangenen Informationen über VPNs durchlaufen haben, enthalten in den Informationen über VPNs, basiert.

13. Verfahren zum Bestimmen eines Verbindungswegs nach einem der Ansprüche 8 bis 10, wobei der Schritt des Unterbindens auf einer Lebensdauer der Informationen über VPNs basiert.

14. Verfahren nach einem der Ansprüche 1 bis 13, wobei die Informationen über die VPNs mindestens eines von Folgendem zusätzlich umfassen:
Eigenschaften des ersten VPN;
Verbindungsqualitäten von Verbindungen, die gegenwärtig von dem ersten VPN verwendet werden;
Verbindungsqualitäten von Verbindungen, die zum Erweitern des ersten VPN verfügbar sind;
Knoten-ID von Knoten, an denen die VPNs verfügbar sind; und
Informationen darüber, welche Domänen passiert werden müssen, um eine Domäne zu erreichen, in der die VPNs verfügbar sind.

15. Verfahren nach Anspruch 14, wobei Eigenschaften des ersten VPN mindestens eines von Folgendem umfassen:
Dienstgüte-Eigenschaften;
Verschlüsselungseigenschaften;
Transparenzschicht-Eigenschaften;
Durchtunnelung-Eigenschaften; und
Topologie-Eigenschaften.

16. Kommunikationsnetzwerk-Domänenanordnung, umfassend:
Mittel (52) zum Erfassen von Informationen über virtuelle private Netzwerke - VPNs -, die in einer Domäne der Kommunikationsnetzwerk-Domänenanordnung verfügbar sind;
Mittel (71) zum Verbreiten der Informationen über VPNs an angrenzende Domänen in einem Kommunikationsnetzwerk, das mindestens zwei Domänen aufweist;
Mittel (73) zum Empfangen von Informationen über VPNs von angrenzenden Domänen in dem Kommunikationsnetzwerk;
**gekennzeichnet durch**:
Mittel (72) zum Verteilen von Informationen basierend auf empfangenen Informationen über VPNs von angrenzenden Domänen an andere angrenzende Domänen;
wobei die Informationen über den ersten VPN mindestens die Domänen-ID von Domänen, in denen VPNs gegenwärtig verfügbar sind, umfassen; und
Mittel (49) zum Bewerten der Informationen über VPNs gemäß einem Qualitätsmaß zum Finden geeigneter Verbindungswege von Knoten der Domäne zu einem ersten VPN.

17. Kommunikationsnetzwerk-Domänenanordnung nach Anspruch 16, wobei das Mittel zum Verbreiten angeordnet ist, die Informationen über VPNs an alle angrenzenden Domänen zu verbreiten, und das Mittel zum Verteilen angeordnet ist, die empfangenen Informationen über VPNs an alle angrenzenden Domänen außer der angrenzenden Domäne, die die empfangenden Informationen über VPNs bereitstellt, zu verteilen.

18. Kommunikationsnetzwerk-Domänenanordnung nach Anspruch 16 oder 17, umfassend:
Mittel zum Zurücksenden einer Bestätigungsnachricht an angrenzende Domänen, von denen Informationen über VPNs erlangt werden;
Mittel zum Empfangen von Bestätigungsnachrichten von angrenzenden Domänen; und
Mittel zum Weiterleiten empfangener Bestätigungsnachrichten für die verteilten Informationen basierend auf empfangenen Informationen über VPNs von angrenzenden Domänen an die angrenzende Domäne, von der die Informationen über VPNs empfangen wurden.

## Revendications

1. Procédé de détermination d'un chemin de connexion, dans un réseau privé virtuel à domaines multiples (22 A-B) - VPN - au sein d'un réseau de communication présentant au moins deux domaines interconnectés (10 A-E), entre un premier noeud dans un premier domaine et un premier réseau VPN, comprenant les étapes ci-dessous consistant à :
collecter (210), dans chaque domaine, des informations connexes aux réseaux VPN disponibles dans chaque domaine ;
diffuser (212) les informations connexes aux réseaux VPN vers des domaines adjacents ;
recevoir (214) des informations connexes aux réseaux VPN en provenance de domaines adjacents ;
distribuer (216) des informations basées sur des informations reçues connexes aux réseaux VPN, depuis des domaines adjacents jusqu'à d'autres domaines adjacents ;
les informations connexes aux réseaux VPN comprenant au moins un identifiant de domaine pour des domaines dans lesquels les réseaux VPN sont à cet instant disponibles ; et
évaluer (218) des informations connexes au premier réseau VPN selon une mesure de qualité en vue de trouver des chemins de connexion appropriés entre ledit premier noeud dans ledit premier domaine et ledit premier réseau VPN.

2. Procédé selon la revendication 1, dans lequel l'étape de diffusion est mise en oeuvre vers tous les domaines adjacents, et l'étape de distribution est mise en oeuvre vers tous les domaines adjacents à l'exception du domaine adjacent fournissant les informations reçues connexes aux réseaux VPN.

3. Procédé selon la revendication 1 ou 2, dans lequel au moins l'une parmi l'étape de diffusion et l'étape de distribution est mise en oeuvre régulièrement.

4. Procédé selon la revendication 1 ou 2, dans lequel au moins l'une parmi l'étape de diffusion et l'étape de distribution est mise en oeuvre lorsqu'elle est déclenchée par un événement.

5. Procédé selon la revendication 4, dans lequel l'événement correspond à une modification au niveau des informations connexes aux réseaux VPN disponibles dans ledit chaque domaine.

6. Procédé selon la revendication 4, dans lequel l'événement correspond à une réception d'informations connexes aux réseaux VPN en provenance d'un domaine adjacent.

7. Procédé selon l'une quelconque des revendications 1 à 6, comprenant les étapes supplémentaires ci-dessous consistant à :
renvoyer un message d'accusé de réception à des domaines adjacents à partir desquels des informations connexes aux réseaux VPN sont obtenues ;
recevoir des messages d'accusé de réception en provenance de domaines adjacents ; et
acheminer des messages d'accusé de réception reçus pour les informations distribuées, sur la base d'informations reçues connexes aux réseaux VPN, depuis des domaines adjacents jusqu'au domaine adjacent à partir duquel les informations connexes aux réseaux VPN ont été reçues.

8. Procédé selon l'une quelconque des revendications 1 à 7, comprenant l'étape supplémentaire consistant à interdire l'acheminement des informations connexes aux réseaux VPN dans des boucles sans fin au sein du réseau de communication.

9. Procédé de détermination d'un chemin de connexion selon la revendication 8, dans lequel l'étape d'interdiction est mise en oeuvre avant la distribution des informations connexes aux réseaux VPN à un domaine adjacent.

10. Procédé de détermination d'un chemin de connexion selon la revendication 8, dans lequel l'étape d'interdiction est mise en oeuvre avant d'accepter des informations reçues connexes aux réseaux VPN en provenance d'un autre domaine.

11. Procédé de détermination d'un chemin de connexion selon l'une quelconque des revendications 8 à 10, dans lequel l'étape d'interdiction est basée sur une comparaison entre les informations reçues en cours connexes aux réseaux VPN et un stockage de données représentant des informations reçues antérieures connexes aux réseaux VPN.

12. Procédé de détermination d'un chemin de connexion selon l'une quelconque des revendications 8 à 10, dans lequel l'étape d'interdiction est basée sur une comparaison entre des identités de domaines et des données représentant des domaines par lesquels les informations reçues connexes aux réseaux VPN ont transité, incluses dans les informations connexes aux réseaux VPN.

13. Procédé de détermination d'un chemin de connexion selon l'une quelconque des revendications 8 à 10, dans lequel l'étape d'interdiction est basée sur une durée de vie des informations connexes aux réseaux VPN.

14. Procédé selon l'une quelconque des revendications 1 à 13, dans lequel les informations connexes aux réseaux VPN comportent en outre au moins l'une des informations ci-dessous :
des propriétés du premier réseau VPN ;
des qualités de liaisons pour des liaisons utilisées à cet instant par le premier réseau VPN ;
des qualités de liaisons pour des liaisons disponibles en vue d'étendre le premier réseau VPN ;
un identifiant de noeud pour des noeuds où les réseaux VPN sont disponibles ; et
des informations indiquant quels domaines doivent être franchis pour atteindre un domaine dans lequel les réseaux VPN sont disponibles.

15. Procédé selon la revendication 14, dans lequel les propriétés du premier réseau VPN comportent au moins l'une parmi :
des propriétés de qualité de service ;
des propriétés de chiffrement ;
des propriétés de couche de transparence ;
des propriétés de tunnellisation ; et
des propriétés topologiques.

16. Agencement de domaines de réseau de communication, comprenant :
un moyen (52) pour collecter des informations connexes à des réseaux privés virtuels - VPN - disponibles dans un domaine de l'agencement de domaines de réseau de communication ;
un moyen (71) pour diffuser les informations connexes aux réseaux VPN vers des domaines adjacents dans un réseau de communication présentant au moins deux domaines ;
un moyen (73) pour recevoir des informations connexes aux réseaux VPN en provenance de domaines adjacents dans le réseau de communication ;
**caractérisé par** :
un moyen (72) pour distribuer des informations sur la base d'informations reçues connexes aux réseaux VPN, depuis des domaines adjacents jusqu'à d'autres domaines adjacents ;
les informations connexes au premier réseau VPN comprenant au moins un identifiant de domaine pour des domaines dans lesquels les réseaux VPN sont à cet instant disponibles ; et
un moyen (49) pour évaluer les informations connexes aux réseaux VPN selon une mesure de qualité en vue de trouver des chemins de connexion appropriés depuis des noeuds du domaine jusqu'au premier réseau VPN.

17. Agencement de domaines de réseau de communication selon la revendication 16, dans lequel le moyen de diffusion est agencé de manière à diffuser les informations connexes aux réseaux VPN vers tous les domaines adjacents, et le moyen de distribution est agencé de manière à distribuer les informations reçues connexes aux réseaux VPN à tous les domaines adjacents, à l'exception du domaine adjacent fournissant les informations reçues connexes aux réseaux VPN.

18. Agencement de domaines de réseau de communication selon la revendication 16 ou 17, comprenant :
un moyen pour renvoyer un message d'accusé de réception à des domaines adjacents à partir desquels des informations connexes aux réseaux VPN sont obtenues ;
un moyen pour recevoir des messages d'accusé de réception en provenance de domaines adjacents ; et
un moyen pour acheminer des messages d'accusé de réception reçus concernant les informations distribuées, sur la base d'informations reçues connexes aux réseaux VPN, depuis des domaines adjacents jusqu'au domaine adjacent à partir duquel les informations connexes aux réseaux VPN ont été reçues.
